(19) Europäisches Patentamt European Patent Office Office européen des brevets

(11) **EP 3 323 590 A1**

(12) **EUROPEAN PATENT APPLICATION**
published in accordance with Art. 153(4) EPC

(43) Date of publication:
**23.05.2018 Bulletin 2018/21**

(51) Int Cl.:
*B29C 49/22* (2006.01)    *B29C 45/13* (2006.01)
*B29C 45/16* (2006.01)    *B29C 49/06* (2006.01)
*B29C 49/08* (2006.01)    *B32B 27/34* (2006.01)
*B32B 27/36* (2006.01)

(21) Application number: **16824496.0**

(22) Date of filing: **13.07.2016**

(86) International application number:
**PCT/JP2016/070691**

(87) International publication number:
**WO 2017/010516 (19.01.2017 Gazette 2017/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.07.2015 JP 2015141360**

(71) Applicant: **Toyo Seikan Group Holdings, Ltd.**
**Shinagawa-ku**
**Tokyo 141-8627 (JP)**

(72) Inventors:
• **HIRAYAMA, Yukiko**
  **Yokohama-shi**
  **Kanagawa 240-0062 (JP)**
• **YAMADA, Toshiki**
  **Yokohama-shi**
  **Kanagawa 240-0062 (JP)**
• **SAWA, Yoshiki**
  **Yokohama-shi**
  **Kanagawa 240-0062 (JP)**

(74) Representative: **J A Kemp**
  **14 South Square**
  **Gray's Inn**
  **London WC1R 5JJ (GB)**

(54) **MULTILAYER PREFORM AND MULTILAYER STRETCH BLOW MOLDED CONTAINER**

(57)    A multilayered preform that includes inner and outer layers of an ethylene terephthalate type polyester resin, and at least one intermediate layer of at least a lowly crystalline ethylene terephthalate type polyester resin and a gas-barrier aromatic polyamide resin, wherein the lowly crystalline ethylene terephthalate type polyester resin contains, as a copolymerizable component, a cyclohexanedimethanol in an amount in a range of 15 to 20 mol% or an isophthalic acid in an amount in a range of 7.5 to 15 mol%, a weight ratio of the lowly crystalline ethylene terephthalate type polyester resin and the gas-barrier aromatic polyamide resin is in a range of 50:50 to 75:25, a weight ratio of the intermediate layer is not less than 1% by weight but is less than 10% by weight per the whole preform, and a haze is not less than 5% in a portion where a multilayered structure has been formed. The multilayered preform is capable of providing a stretch-blow-formed container that has excellent transparency, gas-barrier property and mechanical strength.

**EP 3 323 590 A1**

**Description**

Technical Field:

This invention relates to a multilayered preform and a multilayered stretch-blow-formed container obtained by biaxially stretch-blow-forming the multilayered preform. More specifically, the invention relates to a multilayered preform which is capable of forming a multilayered stretch-blow-formed container having excellent transparency, interlayer adhesiveness and mechanical strength.

Background Art:

Polyester resins as represented by polyethylene terephthalates have excellent properties such as formability, transparency, mechanical strength and resistance against chemicals and have, therefore, been widely used in the field of packing containers. In order to improve gas-barrier property of the containers comprising the polyester resin against oxygen and the like gases, there have been known packing materials of a multilayered structure forming, as an intermediate layer, a layer of a saponified product of an ethylene-vinyl acetate copolymer or a polyamide between the inner layer and the outer layer of a polyester resin. In order to further improve the gas-barrier property of the packing material of the above multilayered structure, it has, further, been attempted to blend the intermediate layer with a clay (patent document 1).

In the packing material of such a multilayered structure, if the polyamide resin is used as the intermediate layer, adhesiveness becomes poor between the polyamide resin and the polyester resin forming the inner and outer layers . Therefore, there has also been proposed to use, as the intermediate layer, a polyester resin and a polyamide resin, or a resin composition of a blend of a polyester resin and a polyamide resin that contains a clay (patent documents 2 and 3).

However, when there is used, as the intermediate layer, a resin composition of a blend of the polyester resin and the polyamide resin and, specifically, an aromatic polyamide resin such as polymetaxylyleneadipamide (MDX6) which has particularly excellent gas-barrier property, there occurs a problem in that excellent transparency possessed by the polyester resin is impaired. As means for improving transparency of a blend of the polyester resin and the polyamide resin, the following patent document 4 discloses a transparent polymer blend which is a polymer composition containing an immiscible blend of a first component of a specific copolymerized polyester resin and a second component which is a specific amide-exchange blend, a difference in the refractive index between the first component and the second component having been adjusted. However, no excellent transparency has been expressed by the stretch-blow-formed container that is obtained by biaxially stretch-blow-forming the preform of such a polymer blend.

In order to solve the above problem, the present inventors have proposed an art of attaining both the gas-barrier property and the transparency of the biaxially stretch-blow-formed container by using a lowly crystalline polyester resin as the polyester resin that is to be added to the polyamide resin

(patent document 5)

Prior Art Documents:

Patent Documents:

    Patent document 1: JP-A-2004-142444
    Patent document 2: JP-A-2005-59859
    Patent document 3: International Publication WO2010/035654
    Patent document 4: Japanese Patent No. 5296385
    Patent document 5: JP-A-2015-157468

Outline of the Invention:

Problems that the Invention is to Solve:

According to the above patent application (patent document 5) filed by the present inventors, it was discovered that, under specific stretching conditions, the lowly crystalline polyester resin exhibits a refractive index close to the refractive index of the polyamide resin. It was, therefore, made possible to provide a biaxially stretch-blow-formed container having gas-barrier property and excellent transparency.

However, use of the lowly crystalline polyester resin brings about a new problem in that the biaxially stretch-blow-formed container assumes a decreased mechanical strength. That is, through the biaxial stretch-blow forming, in general, the polyester resin is oriented and crystallized and, therefore, acquires its mechanical strength. When the lowly crystalline polyester resin is used, however, the orientation and crystallization do not take place so much and the mechanical strength becomes low. When it is attempted to obtain a pressure-resistant container for containing contents that spontaneously produce pressure, such as carbonated beverages, therefore, it becomes likely that the container lacks strength against such cases as when it is fallen down.

It is, therefore, an object of the present invention to provide a stretch-blow-formed container of a multilayered structure that includes inner and outer layers of a polyester resin and an intermediate layer of a blend of a polyester resin and an aromatic polyamide resin, exhibiting excellent transparency, gas-barrier property and mechanical strength, as well as to provide a multilayered preform capable of forming the above stretch-blow-formed container.

Means for Solving the Problems:

According to the present invention, there is provided a multilayered preform that includes inner and outer layers of an ethylene terephthalate type polyester resin, and at least one intermediate layer of at least a lowly crystalline ethylene terephthalate type polyester resin and a gas-barrier aromatic polyamide resin, wherein the lowly crystalline ethylene terephthalate type polyester resin contains, as a copolymerizable component, a cyclohexanedimethanol in an amount in a range of 15 to 20 mol% or an isophthalic acid in an amount in a range of 7.5 to 15 mol%, a weight ratio of the lowly crystalline ethylene terephthalate type polyester resin and the gas-barrier aromatic polyamide resin is in a range of 50:50 to 75:25, a weight ratio of the intermediate layer is not less than 1% by weight but is less than 10% by weight per the whole preform, and a haze is not less than 5% in a portion where a multilayered structure has been formed.

In the multilayered preform of the present invention, it is desired that:

1. The lowly crystalline ethylene terephthalate type polyester resin and the gas-barrier aromatic polyamide resin satisfy the following formula (1),

$$0 \leqq RI_E - RI_A \leqq 0.03 \qquad --- (1)$$

wherein $RI_E$ and $RI_A$ are refractive indexes of injection-formed plates made, respectively, from the lowly crystalline ethylene terephthalate type polyester resin and the gas-barrier aromatic polyamide resin after they have been biaxially stretched into 3 x 3 times simultaneously;

2. The intermediate layer has not been formed in mouth-neck portion;

3. The intermediate layer contains at least either an oxygen-absorbing component that comprises an oxidizing catalyst and an organic component that can be oxidized or a lamellar silicate; and

4. The gas-barrier aromatic polyamide resin is a xylylene group-containing polyamide resin having a terminal amino group concentration of not less than 40 eq/$10^6$ g.

According to the present invention, further, there is provided a multilayered stretch-blow-formed container obtained by biaxially stretch-blow-forming the multilayered preform, a haze being not more than 3% in a portion where a multilayered structure has been formed.

The multilayered stretch-blow-formed container of the present invention, particularly preferably, is a container having resistance against the pressure.

Effects of the Invention:

The present inventors have previously proposed a biaxially stretch-blow-formed container that has such an excellent transparency that a haze in the wall portion is not more than 3% yet maintaining excellent gas-barrier property by selecting a lowly crystalline polyester resin for use as a matrix in the intermediate layer that is blended with an aromatic polyamide type gas-barrier resin, the lowly crystalline polyester resin, after having been stretched, exhibiting a refractive index close to that of the aromatic polyamide resin with a difference in the refractive index $\Delta RI$ (= $| RI_E - RI_A |$) of not more than 0.03. However, it was found that when the biaxially stretch-blow-formed container is used as a pressure-resistant container for containing carbonated beverages, the mechanical strength of the container is not sufficient.

In the present invention, it was made possible to provide a multilayered preform that is capable of forming a biaxially stretch-blow-formed container that has a satisfactory mechanical strength yet maintaining excellent gas-barrier property and transparency as a result of that:

(i) the lowly crystalline ethylene terephthalate type polyester resin contains, as a copolymerizable component, a cyclohexanedimethanol in an amount in a range of 15 to 20 mol% or an isophthalic acid in an amount in a range of 7.5 to 15 mol%;

(ii) a weight ratio of the lowly crystalline ethylene terephthalate type polyester resin and the gas-barrier aromatic polyamide resin is in a range of 50:50 to 75:25; and

(iii) a weight ratio of the intermediate layer is not less than 1% by weight but is less than 10% by weight per the whole preform.

The above actions and effects of the invention will become obvious from the results of Examples appearing later. That is, despite the intermediate layer is formed by using a blend of the polyamide resin and the lowly crystalline polyester resin satisfying the above-mentioned formula (1), a sufficient degree of transparency or gas-barrier property is not obtained, the interlayer peeling occurs or the strength of the bottle decreases if even any one of the above-mentioned requirements (i) to (iii) is not satisfied (Comparative Examples 1 to 7) . On the other hand, the biaxially stretch-blow-formed containers obtained from the multilayered preform of the present invention are satisfactory in regard to transparency, gas-barrier property, suppressing the interlayer peeling, as well as strength of the bottle (Examples 1 to 4).

In the multilayered preform of the present invention, further, the portion where the intermediate layer is present has a haze of not less than 5% and is opaque. It is, therefore, allowed to see the position where a multilayered structure inclusive of the intermediate layer is formed in the preform. It is, therefore, allowed to easily make sure if the gas-barrier resin is made present at the position that turns into the body portion that assumes the smallest thickness after the step of stretch-blow-forming and that must have the gas-barrier property, providing advantage in that the inspection is facilitated in the step of production.

Brief Description of the Drawings:

[Fig. 1] It is a view illustrating a sectional structure of a multilayered preform of the present invention.
[Fig. 2] It is a view illustrating another sectional structure of the multilayered preform of the present invention.
[Fig. 3] It is a view showing a multilayered stretch-blow-formed container of the present invention.

Modes for Carrying Out the Invention:

(Multilayered preform)

The multilayered preform of the present invention is a multilayered preform that includes inner and outer layers of an ethylene terephthalate type polyester resin (hereinafter often referred to as "PET resin"), and at least one intermediate layer of at least a lowly crystalline ethylene terephthalate type polyester resin (hereinafter often referred to as "lowly crystalline PET resin") and a gas-barrier aromatic polyamide resin (hereinafter often referred to as "barrier polyamide resin"), wherein, as described above, the important features are that (i) the lowly crystalline PET resin contains, as a copolymerizable component, a cyclohexanedimethanol in an amount in a range of 15 to 20 mol% or an isophthalic acid in an amount in a range of 7.5 to 15 mol%, (ii) a weight ratio of the lowly crystalline PET resin and the gas-barrier polyamide resin is in a range of 50:50 to 75:25 and, specifically, 60:40 to 75:25, and (iii) a weight ratio of the intermediate layer is not less than 1% by weight but is less than 10% by weight and, specifically, in a range of 3 to 8% by weight per the whole preform.

(Inner and outer layers)

The PET resin used for forming the inner and outer layers of the present invention is a polyester resin of which not less than 50 mol% and, specifically, not less than 80 mol% of the dicarboxylic acid component is a terephthalic acid, and of which not less than 50 mol% and, specifically, not less than 80 mol% of the diol component is an ethylene glycol. The above PET resin has excellent mechanical and thermal properties as well as excellent stretching property enabling, therefore, the intermediate layer, too, to be uniformly stretched at the time of stretch forming.

The PET resin may contain copolymerizable components other than the terephthalic acid and ethylene glycol.

As the carboxylic acid components other than the terephthalic acid, there can be exemplified isophthalic acid, naphthalenedicarboxylic acid, p-$\beta$-oxyethoxybenzoic acid, biphenyl-4,4'-dicarboylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the dicarboxylic acid components and diol components may include trifunctional or more highly functional polybasic acids and polyhydric alcohols. For instance, there can be exemplified such polybasic acids as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and such polyhydric alcohols as pentaerythritol, glycerol, trimethylolpropane, 1,2,6-hexanetriol, sorbitol, and 1,1,4,4-tetrakis(hydroxymethyl) cyclohexane.

It is desired that the PET resin used for forming the inner and outer layers of the invention has an intrinsic viscosity in a range of 0.60 to 1.40 dL/g as measured by using a mixed solvent of phenol and tetrachloroethane at a weight ratio of 1: 1 at a temperature of 30°C. It is, further, desired that the PET resin has a melting point (Tm) of 200 to 275°C to improve heat resistance and workability of the multilayered containers. It is desired that it also has a glass transition point of not lower than 30°C and, specifically, in a range of 50 to 120°C.

The PET resin used for forming the inner and outer layers of the invention can be blended with blending agents for resins known per se., such as coloring agent, antioxidant, stabilizer, antistatic agents, parting agent, lubricant and nucleating agent within ranges in which they do not impair the quality of the finally formed products according to known recipes.

(Barrier intermediate layer)

The intermediate layer of the multilayered preform of the present invention comprises at least a lowly crystalline PET resin and a barrier polyamide resin. Here, the important features reside in that (i) the lowly crystalline PET resin contains, as a copolymerizable component, a cyclohexanedimethanol in an amount in a range of 15 to 20 mol% or an isophthalic acid in an amount in a range of 7.5 to 15 mol%, (ii) a weight ratio of the lowly crystalline PET resin and the gas-barrier aromatic polyamide resin is in a range of 50:50 to 75:25 and, specifically, 60:40 to 75:25, and (iii) a weight ratio of the intermediate layer is not less than 1% by weight but is less than 10% by weight and, specifically, in a range of 3 to 8% by weight per the whole preform.

If the content of the cyclohexanedimethanol or the isophthalic acid in the lowly crystalline PET resin becomes larger than the above range, then the crystallinity decreases greatly and it becomes difficult to maintain the mechanical strength of the container. If the content of the cyclohexanedimethanol or the isophthalic acid becomes smaller than the above range, on the other hand, it becomes difficult to maintain the transparency of the container.

As for the weight ratio of the lowly crystalline PET resin and the barrier polyamide resin, further, if the amount of the lowly crystalline PET resin is larger than the above range, the container assumes decreased mechanical strength. If the amount of the lowly crystalline PET resin is smaller than the above range, on the other hand, there is formed an islands-sea dispersion structure in which a plurality of lowly crystalline PET resin dispersion phases are present in a continuous phase of the barrier polyamide resin. Therefore, the interlayer close adhesion may be impaired between the inner layer and the outer layer, and the interlayer peeling may easily occur in case shocks are received.

Further, if the weight ratio of the barrier intermediate layer in the whole preform is smaller than the above range, the gas-barrier property is not attained to a sufficient degree. If the weight ratio of the intermediate layer is larger than the above range, on the other hand, the mechanical strength tends to decrease.

It is desired that the lowly crystalline PET resin and the barrier polyamide resin that constitute the barrier intermediate layer are selected in such a combination that a difference in the refractive index $\Delta RI$ (= $RI_E$ - $RI_A$) represented by the above-mentioned formula (1) lies in a range of 0 to 0.03. That is, with the difference in the refractive index between the lowly crystalline PET resin and the barrier aromatic polyamide resin lying in the above range, it is made possible to impart oriented crystallinity by stretching even by a small amount and, therefore, to improve the mechanical strength of the biaxially stretch-blow-formed container yet maintaining transparency of the container obtained by biaxially stretch-blow-forming the multilayered preform and preventing the crystallinity of the lowly crystalline PET resin from becoming too low.

The stretching condition of the above formula (1) is in conformity with the stretching condition of when the multilayered preform is to be biaxially stretch-blow formed. Examples appearing later are demonstrating that if the differences in the refractive index of the samples prepared under the above stretching condition are within the above range, then the multilayered stretch-blow-formed containers have hazes of not more than 3%.

[Lowly crystalline PET resin]

The lowly crystalline PET resin that constitutes the intermediate layer of the present invention ensures adhesiveness to the PET resin that constitutes the inner and outer layers, improves interlayer adhesiveness, has a refractive index in a range of 1.56 to 1.58 before it is stretched, has a refractive index in a range of 1.58 to 1.62 after it is stretched under the condition of the above-mentioned formula (1), i.e., has a refractive index close to that of a barrier polyamide resin after it is stretched as will be described later and, therefore, does not impair the transparency of the stretch-blow-formed container.

That is, the PET resin that is, usually, used for the stretch-blow-formed containers is a crystalline polyester resin that is used for imparting mechanical strength and heat resistance to the containers. If stretched, however, the crystalline polyester resin is oriented and is crystallized to an increased degree. Therefore, its refractive index changes a lot depending on the stretching. If used in combination with the barrier polyamide resin, therefore, a difference increases between their refractive indexes causing a decrease in the transparency of the biaxially stretch-blow-formed container.

The present invention, on the other hand, uses a specific lowly crystalline PET resin to prevent a decrease in the mechanical strength of the biaxially stretched blow-formed container caused by too low crystallinity, and to impart oriented crystallinity by stretching without impairing transparency.

In the specification, the words "lowly crystalline" PET resin stand for the one which, when heated at a rate of 10°C /min. in the differential scanning calorimetry (DSC), exhibits no peak in the crystal fusion or, if it exhibits a peak in the crystal fusion, has a quantity of heat of crystal fusion ($\Delta$ Hm) of not more than 40 J/g that corresponds to the peak in the crystal fusion.

As the lowly crystalline PET resin, there can be, desirably, used a PET resin comprising 15 to 20 mol% of cyclohexanedimethanol and the remainder of ethylene glycol per 100 mol% of the diol component, or a PET resin comprising 7.5 to 15 mol% of isophtalic acid component and the remainder of terephthalic acid per 100 mol% of the dicarboxylic acid component.

Specifically, within the above-mentioned ranges, there can be desirably used a lowly crystalline PET resin that contains 15 to 19 mol% of the cyclohexanedimethanol or 10 to 15 mol% of the isophthalic acid.

The above copolymerizable components can be introduced into the lowly crystalline PET resin by either a copolymerization method or a method of blending polymers.

It is desired that the lowly crystalline PET resin used for the intermediate layer of the present invention has an intrinsic viscosity (IV) of not less than 0.60 dL/g and, specifically, in a range of 0.70 to 1.40 dL/g as measured by using a mixed solvent of phenol and tetrachloroethane at a weight ratio of 1: 1 at a temperature of 30°C. By using the lowly crystalline PET resin having a large intrinsic viscosity (IV), it is made possible to improve the mechanical strength and to effectively prevent the occurrence of interlayer peeling caused by the shock of when fallen down.

The lowly crystalline PET resin that constitutes the intermediate layer of the present invention can also contain copolymerizable components other than those described above in amounts in a range in which they do not impair the desired low crystallinity and refractive index of the lowly crystalline PET resin.

As the carboxylic acid components other than the terephthalic acid, there can be exemplified isophthalic acid, naphthalenedicarboxylic acid, $\rho$-$\beta$-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

The above dicarboxylic acid components and diol components may include trifunctional or more highly functional polybasic acids and polyhydric alcohols. Their examples include polybasic acids such as trimellitic acid, pyromellitic acid, hemimellitic acid, 1,1,2,2-ethanetetracarboxylic acid, 1,1,2-ethanetricarboxylic acid, 1,3,5-pentanetricarboxylic acid 1,2,3,4-cyclopentanetetracarboxylic acid and biphenyl-3,4,3',4'-tetracarboxylic acid, as well as polyhydric alcohols such as pentaerythritol, glycerol, trimethylolpropane, 1,2,6-hexanetriol, sorbitol and 1,1,4,4-tetrakis(hydroxymethyl)cyclohexane.

When the lowly crystalline PET resin contains the cyclohexanedimethanol in an amount of 15 to 20 mol% and the isophthalic acid as the dicarboxylic acid component, then the amount of the isophthalic acid should not be more than 4 mol%. Or, when the lowly crystalline PET resin contains the isophthalic acid in an amount of 7.5 to 15 mol% and the cyclohexanedimethanol as the diol component, then the content of the cyclohexanedimethanol should not be more than 4 mol%.

It is, further, desired that the lowly crystalline PET resin contains the diethylene glycol in an amount of not more than 4 mol%.

[Barrier polyamide resin]

The aromatic polyamide type gas-barrier resin that constitutes the intermediate layer of the present invention has excellent gas-barrier property, has a refractive index in a range of 1.57 to 1.59 before it is stretched, has a refractive index in a range of 1.57 to 1.60 after it is stretched under the condition of the above-mentioned formula (1), and has a difference in the refractive index represented by the above-mentioned formula (1) in a range of 0 to 0.03 when it is used in combination with the lowly crystalline PET resin described above.

As the aromatic polyamide resin having the above-mentioned excellent gas-barrier property, there is, desirably, used a xylylene group-containing polyamide and, specifically, a polyamide obtained from a diamine component that chiefly comprises an m-xylylenediamine and/or a p-xylylenediamine and from an aliphatic dicarboxylic acid and/or an aromatic dicarboxylic acid.

Concretely, there can be exemplified homopolymers such as polymetaxylyleneadipamide, polymetaxylylenesebacamide, polymetaxylylenesuberamide, polyparaxylylenepimelamide and polymetaxylyleneazelamide; copolymers such as metaxylylene/paraxylyleneadipamide copolymer, metaxylylene/paraxylylenepimelamide copolymer, metaxylylene/paraxylylenesebacamide copolymer and metaxylylene/paraxylyleneazelamide copolymer; or copolymers obtained by copolymerizing a homopolymer or a copolymer component thereof with an aliphatic diamine such as hexamethylenediamine, an alicyclic diamine such as piperadine, an aromatic diamine such as para-bis(2-aminoethyl)benzene, an aromatic dicarboxylic acid such as terephthalic acid, a lactam such as $\varepsilon$-caprolactam, an $\omega$-aminocarboxylic acid such as 7-aminoheptanoic acid or aromatic aminocarboxylic acid such as para-aminomethylbenzoic acid.

These aromatic polyamide resins, too, should have molecular weights large enough for forming films, and should have relative viscosities of not less than 1.1 and, specifically, not less than 1.5 as measured in, for example, concentrated sulfuric acid (concentration of 1.0 g/dl) at 30°C.

Further, if an oxygen-absorbing component that will be described later is to be added, it is desired to use a polyamide resin that is obtained by the polycondensation of a dicarboxylic acid component with a diamine component comprising chiefly a xylylenediamine having a terminal amino group concentration of not less than 40 eq/$10^6$ g since there takes place no deterioration by oxidation when oxygen is absorbed, and the mechanical strength of the container does not decrease.

[Other components]

In the stretch-blow-formed container of the present invention, it is desired that the intermediate layer contains at least either an oxygen-absorbing component comprising an oxidizing catalyst and an organic component that can be oxidized, or a lamellar silicate.

The oxygen-absorbing component comprises a combination of a conventional oxidizing catalyst and an organic component that can be oxidized. Upon being blended with it, the intermediate layer becomes capable of shutting off or trapping oxygen that permeates into the container from the exterior thereof, or capable of trapping oxygen remaining in the container, and capable of improving preservability of the contents.

As the organic component that can be oxidized, there can be exemplified organic matters that can be oxidized or, concretely, butadiene, polyene oligomers or polymers modified with acid or acid anhydride, such as maleic anhydride-modified butadiene, as well as low molecular compounds having unsaturated bonds.

As the oxidizing catalyst, there can be used metal components of the Group VIII of periodic table, such as iron, cobalt, nickel and the like though not limited thereto only.

The organic component that can be oxidized is added in an amount of, desirably, 2 to 10 parts by weight per 100 parts by weight of the barrier polyamide resin while the oxidizing catalyst is added in an amount of, desirably, at least 300 ppm calculated as metal.

The intermediate layer blended with the lamellar silicate exhibits further improved gas-barrier property due to the detouring effect of the lamellar silicate.

As the lamellar silicate, there can be exemplified mica, vermiculite and smectite. Preferred lamellar silicates are those of the 2-octaheral type or the 3-octahedral type having electric charge densities of 0.25 to 0.6. As the 2-octahedral type ones, there can be exemplified montmorillonite, beidellite and nontronite. As the 3-octahedral type ones, there can be exemplified hectorite and saponite. The lamellar silicate is preferably the one that is swollen by being treated with an organificating agent such as quaternary ammonium salt. As the quaternary ammonium salt, there can be used a quaternary ammonium salt having at least one or more alkyl groups with not less than 12 carbon atoms or, concretely, trimethyldodecylammonium salt or trimethyltetradecylammonium salt.

The lamellar silicate is added in an amount of, desirably, 1 to 10 parts by weight and, specifically, 1 to 8 parts by weight per 100 parts by weight of the barrier polyamide resin.

The above oxygen-absorbing component and/or the lamellar silicate may be added to either the lowly crystalline PET resin or the barrier polyamide resin, but are, particularly preferably, added to the barrier polyamide resin. That is, if the lowly crystalline PET resin that serves as the matrix of the intermediate layer contains the oxygen-absorbing component and/or the lamellar silicate, then the formability becomes poor and interlayer peeling may take place. Therefore, these components are made present in the dispersion phase that comprises the barrier polyamide resin in order to suppress a decrease in the formability and in the interlayer adhesive force.

The lowly crystalline PET resin or the barrier polyamide resin that constitutes the intermediate layer can be blended with known blending agents for resins, such as deoxidizing agent, filler, coloring agent, heat stabilizer, weather stabilizer, antioxidant, anti-aging agent, photo stabilizer, ultraviolet ray absorber, antistatic agent, lubricant like metal soap or wax, and resin or rubber for reforming according to known recipe within ranges in which they do not impair the object of the invention.

If the above-mentioned components are added to the lowly crystalline PET resin or the barrier polyamide resin that constitutes the intermediate layer, it is desired that the amounts of the components that are added are smaller than the amount of the lowly crystalline PET resin or the aromatic polyamide resin that serves as the base material so that the refractive index is affected little. In this case, a difference in the refractive index represented by the above formula (1) may be measured from the plates obtained by injection-forming the lowly crystalline PET resin and the aromatic polyamide resin that serve as the base material after they have been biaxially stretched into 3 x 3 times simultaneously.

(Multilayered structure)

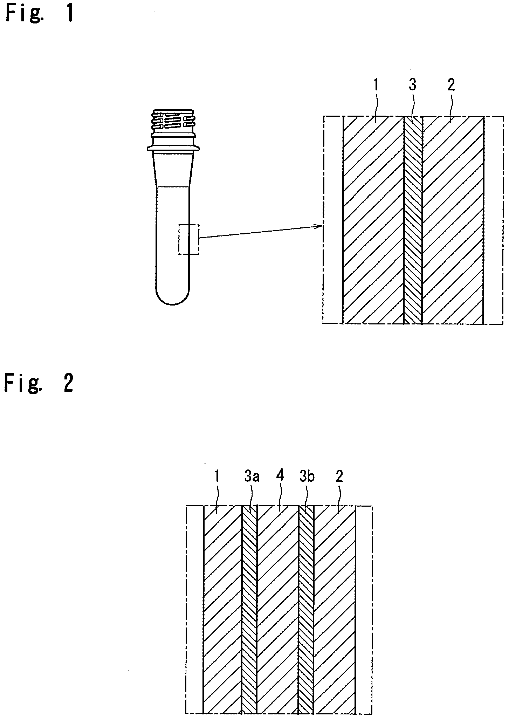

The multilayered preform of the present invention can employ various kinds of layer constitutions so far as they have the inner and outer layers of the PET resin, and at least one intermediate layer comprising the above-mentioned lowly crystalline PET resin and the barrier polyamide resin. As shown in Fig. 1, the multilayered preform can assume the two-kind-three-layer constitution including a barrier intermediate layer 3 comprising the lowly crystalline PET resin and the barrier polyamide resin between the inner layer 1 and the outer layer 2 of the PET resin. Or as shown in Fig. 2, the multilayered preform can also assume the two-kind-five-layer constitution including the inner layer 1 and the outer layer 2 of the PET resin, and two barrier intermediate layers 3a and 3b comprising the lowly crystalline PET resin and the barrier polyamide resin between the inner layer 1 of the PET resin and the intermediate layer 4 of the PET resin and between the outer layer 2 of the PET resin and the intermediate layer 4 of the PET resin.

In the present invention, the interlayer adhesiveness has been improved among the inner layer, outer layer and intermediate layer. In producing the multilayered containers, therefore, there is no need of interposing the adhesive resin among the resin layers. The adhesive resin, however, may be interposed among the resin layers, as a matter of course. As the adhesive resin, there can be used a thermoplastic resin that has, on a main chain or side chains thereof, a carbonyl (-CO-) group due to carboxylic acid, carboxylic anhydride, carboxylate, carboxylic acid amide or carboxylic acid ester at a concentration of 1 to 700 milliequivalents (meq) /100 g of the resin and, specifically, 10 to 500 meq/100 g of the resin. Preferred examples of the adhesive resin include ethylene-acrylic acid copolymer, ionically crosslinked olefin copolymer, maleic anhydride-grafted polyethylene, maleic anhydride-grafted polypropylene, acrylic acid-grafted polyolefin, ethylene-vinyl acetate copolymer and copolymerized polyester.

In the multilayered preform of the invention, it is desired that a weight ratio of the intermediate barrier layer is not less than 1% by weight but is less than 10% by weight and, specifically in a range of 3 to 8% by weight in the whole container. If the weight ratio of the intermediate barrier layer is smaller than the above range, the gas-barrier property cannot be obtained to a sufficient degree. If the weight ratio of the intermediate barrier layer is larger than the above range, on the other hand, it becomes difficult to maintain the mechanical strength of the containers.

As described above, further, if there are made present a plurality of intermediate barrier layers comprising the lowly crystalline PET resin and the barrier polyamide resin, it is desired that the weight ratio of the intermediate barrier layers as a whole lies within the above-mentioned range.

(Method of production)

The multilayered preform of the present invention can be produced by any conventional method of production, such as a co-extrusion forming method in which a resin composition for intermediate layer comprising a lowly crystalline PET resin and a barrier polyamide resin is co-extruded together with a PET resin for forming the inner and outer layers; a simultaneous injection-forming method in which a resin composition for intermediate layer and a PET resin are simultaneously injected into a mold; a sequential injection method in which a PET resin, a resin composition for intermediate layer and a PET resin are sequentially injected into a mold; or a compression forming method in which a co-extruded product of a resin composition for intermediate layer and a PET resin is compression-formed by using a core mold and a cavity mold.

In the multilayered preform, it is important that a multilayered structure is formed in at least a portion that becomes the body portion that assumes the smallest thickness after the stretching. This makes it possible to impart the required gas-barrier property to the container and to maintain transparency of the container. Namely, with the intermediate layer of the invention having been stretched, the lowly crystalline PET resin and the barrier polyamide resin assume refractive indexes that become close to each other and, therefore, become transparent. It is, therefore, desired that the multilayered structure is formed in the preform in only the portion that is to be fully stretched from the standpoint of maintaining transparency of the container as a whole.

In the heat-resistant container having the mouth-neck portion that are thermally crystalized, therefore, it does not matter if the mouth-neck portion are transparent or not. Namely, the mouth-neck portion of the preform is not stretched if they are to become the mouth portion of the container. It is, therefore, desired that no multilayered structure is formed in the mouth-neck portion of the preform.

In the preform of before being stretched, the portion where the multilayered structure has been formed has a haze of not less than 5% and is less transparent than the portion that comprises the PET resin only and where no multilayered structure has been formed. In the preform, therefore, it is easy to see if the multilayered structure has been formed.

In the invention, when the intermediate layer is to be blended with an oxygen-absorbing component or a lamellar silicate, it is desired, as described above, to prepare a pelletized master batch by adding them to the barrier polyamide resin in advance. The composition for forming the intermediate layer is prepared, desirably, by blending the master batch and the lowly crystalline PET resin together in such amounts that the ratio of amounts of the lowly crystalline PET resin and the barrier polyamide resin becomes as described above.

The multilayered stretch-blow-formed container of the invention is produced by biaxially stretch-blow-forming the multilayered preform that has the multilayered structure of the invention described above.

It is desired that forming the multilayered preform and the biaxial stretch-blow forming are conducted by a cold parison system. They, however, can also be conducted by a hot parison system that executes the stretch-blow forming without thoroughly cooling the multilayered preform that is formed.

Prior to conducting the biaxial stretch-blow forming, further, the preform is heated at a stretching temperature of 90 to 120°C by such means as hot air, infrared-ray heater or high-frequency induction heating.

The heated preform is fed into a known stretch-blow-forming machine, set in a mold, pulled and stretched in the axial direction by pushing a stretching rod therein, and is stretched in the circumferential direction by blowing a fluid therein. Here, as described above, the biaxially stretch-blow-formed container of the invention has excellent gas-barrier property and mechanical strength, and can be, preferably, used as a pressure-resistant container. In this case, the containers can be produced in widely known pressure-resistant bottom shapes, such as the so-called petaloidal shape and the champaign shape forming a dent at the center of the bottom portion thereof.

It is desired that the multilayered stretch-blow-formed container which is the final product of the invention is stretched at an area ratio of 2.0 to 4.0 times and, specifically, 2.5 to 3.5 times, at a ratio in the axial direction of 2.0 to 4.0 times and, specifically, 2.5 to 3.5 times or at a ratio in the circumferential direction of 2.0 to 4.0 times and, specifically, 2.5 to 3.5 times from such a standpoint that the difference in the refractive index ($\Delta$RI) between the lowly crystalline PET resin and the barrier polyamide resin that constitute the intermediate layer is in a range of 0 to 0.03 after having been stretched. This enables the refractive indexes of the lowly crystalline PET resin and the barrier polyamide resin to become close to each other in the intermediate layer after it has been stretched and, therefore, the value $\Delta$RI to lie within the above-mentioned range making it, therefore, possible to obtain a stretch-blow-formed container having such excellent transparency as a haze of not more than 3% in the body portion.

In the multilayered stretch-blow-formed container of the invention, the thickness in the body portion varies depending on the volume (weight) of the container or the use of the container but is, desirably, as small as less than 0.36 mm and, specifically, in a range of 0.20 to 0.30 mm. The thickness of the body portion specified in the invention is a value measured at the thinnest portion of the body portion of the container.

EXAMPLES

1. Materials.

Described below are the materials used in Examples.

(1) Ethylene terephthalate type polyester resin.
PET1: Isophthalic acid (copolymerization ratio = 1.8 mol%), diethylene glycol (copolymerization ratio = 2.3 mol%) copolymerized polyethylene terephthalate resin (5015w: manufactured by Shinkong Synthetic Fibers Co. IV = 0.83).
(2) Lowly crystalline ethylene terephthalate type polyester resins.

APET1: Isophthalic acid (copolymerization ratio = 15 mol%), diethylene glycol (copolymerization ratio = 3.6 mol%) copolymerized polyethylene terephthalate resin (IV = 0.70).
APET2: Isophthalic acid (copolymerization ratio = 10 mol%), diethylene glycol (copolymerization ratio = 3.0 mol%) copolymerized polyethylene terephthalate resin (IV = 0.74).
APET3: 1,4-Cyclohexanedimethanol (copolymerization ratio = 30 mol%), diethylene glycol (copolymerization ratio = 2.3 mol%) copolymerized polyethylene terephthalate resin (S2008: manufactured by SK Chemicals Co., Ltd. IV = 0.78).
APET4: Isophthalic acid (copolymerization ratio = 20 mol%), diethylene glycol (copolymerization ratio = 3.3 mol%) copolymerized polyethylene terephthalate resin (IV = 0.75).

(3) Aromatic polyamide.
PA1: Polymetaxylyleneadipamide resin (S6007: manufactured by Mitsubishi Gas Chemical Company, Inc.).

2. Forming the multilayered preform.

By using a co-injection forming machine, there was formed a multilayered preform of a two-kind-three-layer constitution (PET/intermediate layer/PET). To a hopper of the injection-forming machine for forming the inner and outer PET layers, there was thrown the ethylene terephthalate type resin that has been dried and to a hopper of the injection-forming machine for forming the intermediate layer, there were thrown the lowly crystalline ethylene terephthalate type resin and the aromatic polyamide type gas-barrier resin that have been dried and blended together at a predetermined ratio. These materials were co-injection formed. The inner and outer PET layers were set at a temperature of 290°C while the intermediate layer was formed at a temperature of 260 to 280°C . The preform weighing 24 g was formed in a manner that the intermediate layer reached neither the mouth-neck portion nor the bottom portion.

3. Forming the multilayered bottle.

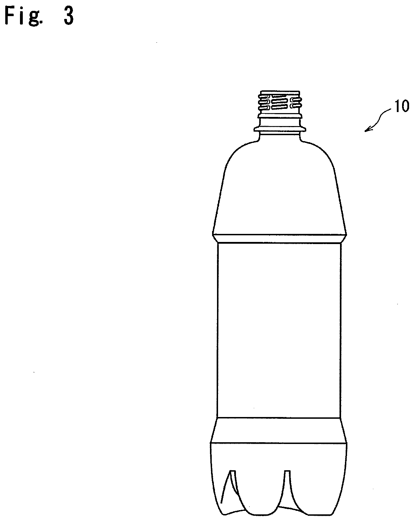

The body portion of the multilayered preform was heated at a surface temperature of 100°0 from the outer side by using an infrared-ray heater, was mechanically stretched in the axial direction of the bottle by using a stretch rod, and was then biaxially stretched and blown by blowing the air therein to thereby form a stretch-blown bottle of a capacity of 500 ml shown in Fig. 3, the body portion of which being stretched roughly by 3 times longitudinally, 3 times transversely and, therefore, 9 times in area. The mold temperature was set at 60°C, and the high-pressure air of 3.5 MPa maintained at room temperature (20°C) was blown.

4. Forming the injection-formed plate.

The above-mentioned materials that have been dried were fed alone or being dry-blended at a predetermined ratio into the hopper of an injection-forming machine (NN75JS:
manufactured by Niigata Engineering Co., Ltd.) . By setting the temperature of the barrel at 260 to 280°C, the materials were injection-formed into a plate of a size of 90 x 90 x 1.5 mm.

5. Forming the biaxially stretched sheet.

By using a biaxially stretching testing machine (x6H-S: manufactured by Toyo Seiki Seisaku-sho, Ltd.), the above injection-formed plate was biaxially stretched under the following conditions.

Temperature in the chamber: 100°C
Heating time prior to stretching: 2 minutes and 30 seconds
Stretching method: simultaneous biaxial stretching
Stretching ratios: 3 times longitudinally, 3 times transversely
Rate of stretching: 10 m/min. in both directions

6. Measurements.

(1) Measuring the haze in the body portion of the bottle.

The body portion of the multilayered bottle was cut out and was measured for its haze by using a color computer (SM-4: manufactured by Suga Test Instruments Co. , Ltd.) . The measured value was an average value from three arbitrary points.

(2) Measuring the haze in the body portion of the preform.

A sample of a cylindrical shape 30 mm in height was cut out from the center of the body portion of the multilayered preform, and was cut into two in the direction of height of the preform to obtain semicircular cylindrical samples. By using a spectrophotometer with an integrating sphere equipment (UV-3100PC: manufactured by Shimadzu Corporation), the samples were measured for their hazes according to the procedure described below. The scanning conditions were in the mode of measuring the transmission factors covering a range of 400 to 700 nm.

<1> Standard white plates were fitted to both the sample side and the reference side, and were scanned along the base lines. Thereafter, measurement was taken to calculate an integrated value of transmission factors (T0) over 400 to 700 nm.

<2> The standard white plate was removed from the sample side, and spectra of light scattered by the equipment were measured to calculate an integrated value of transmission factors (T1) over 400 to 700 nm.

<3> The sample preform was fitted to the sample side. Here, the outer surface side of the semicircular preform was closely contacted to the integrating sphere so that the incident light fell from the inner surface side of the preform. In this state, the spectra of light scattered by the sample were measured to calculate an integrated value of transmission factors (Td) over 400 to 700 nm.

<4> In the state of <3> above, the standard white plate was fitted to the sample side, and the whole spectra of light transmitting through the sample were measured to calculate an integrated value of transmission factors (Tt) over 400 to 700 nm.

From the integrated values of transmission factors obtained above, the haze of the preform was calculated according to the following formula,

$$\texttt{Haze (\%) of preform = \{Td - Tt x (T1/T0)\}/Tt x 100}$$

The measured value was an average of values measured from the two semicircular cylindrical samples obtained from each sample.

(3) Measuring the carbonic acid gas-barrier property of the bottle.

By taking the volume of the bottle into account, the dry ice was put in a required amount into the bottle so that the initial internal pressure was 0.4 MPa. The bottle was then sealed with a plastic cap. After stored for 6 weeks in the air-conditioned chamber maintained at 22°C50%RH, the central part of the body portion of the bottle was measured for its double-peak area stemming from $CO_2$ and appearing near 4990 $cm^{-1}$ by using an FT-IR (FTS7000 SERIES: manufactured by VARIAN Co.) and for its diameter of the body portion using Vernier calipers . A gas loss ratio was calculated according to the following formula,

$$\texttt{A1 = S1 x (D0/D1)}$$

$$\texttt{Gas loss ratio (\%) = (A1 - A0)/A0 x 100}$$

A0: initial peak area
S1: peak area in a sequence period
A1: peak area in a sequence period (after the body diameter was corrected)
D0: initial body diameter
D1: body diameter in a sequence period

(4) Measuring the refractive index after biaxially stretched into 3 x 3 times simultaneously.

From the biaxially stretched sheet formed as described above, a sample of a size of 30 x 10 mm was cut out such that the direction of short side was the direction of measurement. By using the Abbes' refractometer having an eyepiece with a polarizer plate (NAR-1T: manufactured by Atago Co., Ltd.), the sample was measured for its refractive indexes in the directions of longitudinal and transverse stretches, and an average value thereof was regarded to be a value measured from the sample.

(5) Interlayer peeling test.

By using a cutter knife, the body portion of the bottle was incised over 30 mm, and the appearance was evaluated. From the incised portion, it was confirmed with the eye if the interlayer peeling was taking place.

(6) Testing the resistance of the bottles against the pressure.

By using a PET bottle burst testing machine (PTP-25K-1500, manufactured by Kazama Engineering Co., Ltd.), the bottles were measured for their bursting strengths.

(Example 1)

By using a co-injection forming machine, there was formed a multilayered preform of a two-kind-three-layer constitution (PET/intermediate layer/PET). To a hopper of the injection-forming machine for forming the inner and outer PET layers, there was thrown the dried PET1 and to a hopper of the injection-forming machine for forming the intermediate layer, there were thrown the APET1 and PA1 that have been dried being blended at a weight ratio of 70:30, and these materials were co-injection formed. The inner and outer PET layers were set at a temperature of 290°C while the intermediate layer was formed at a temperature of 260°C. The preform weighed 24 g and the ratio of the intermediate layer was 6% by weight of the whole bottle. The preform was so formed that the intermediate layer reached neither the mouth-neck portion nor the bottom portion.
Next, the multilayered preform was biaxially stretch-blow formed into the multilayered bottle by the above-mentioned method. The obtained preform and the bottle were measured for their haze in the body portion of the preform, haze in the body portion of the bottle, carbonic acid gas-barrier property of the bottle, interlayer peeling and bursting strength by the methods described above.
Further, the dried APET1 was fed into the hopper of the injection-forming machine and was injection-formed while setting the temperature of the barrel at 280°C to obtain an injection-formed plate of a size of 90 x 90 x 1.5 mm. The injection-formed plate was biaxially stretched into 3 x 3 times simultaneously by the method described above to obtain a biaxially stretched sheet. The PA1, too, was similarly injection-formed into a plate and was biaxially stretched into a sheet. Here, however, the temperature of the barrel was set at 260°C. The stretched sheets were measured for their refractive indexes by the method described above to calculate their refractive indexes and a difference $\Delta RI$ (= $RI_E$ - $RI_A$) in the refractive index.

(Example 2)

A preform and a bottle were formed and measured in the same manner as in Example 1 but throwing, into the hopper of the injection-forming machine for forming the intermediate layer, a dry blend of APET2 and PA1 at a weight ratio of 70:30.
Further, a biaxially-stretched sheet was formed and measured in the same manner as in Example 1 but feeding the APET2 into the hopper of the injection-forming machine.

(Example 3)

A preform and a bottle were formed and measured in the same manner as in Example 1 but throwing, into the hopper of the injection-forming machine for forming the intermediate layer, a dry blend of APET3, PET1 and PA1 at a weight ratio of 35:35:30 and forming the intermediate layer at a temperature of 280°C .
Further, a biaxially-stretched sheet was formed and measured in the same manner as in Example 1 but feeding a dry blend of APET3 and PET1 at a weight ratio of 1: 1 into the hopper of the injection-forming machine.

(Example 4)

A preform, a bottle and a biaxially stretched sheet were formed and measured in the same manner as in Example 3 but throwing, into the hopper of the injection-forming machine for forming the intermediate layer, a dry blend of APET 3, PET1 and PA1 at a weight ratio of 30:30:40.

(Comparative Example 1)

By using the co-injection forming machine but without operating the injection-forming machine for forming the intermediate layer, there was formed a single-layered PET preform weighing 24 g by throwing the PET1 into the hopper of the injection-forming machine for forming the inner and outer PET layers and setting the temperature at 290°C. The single-layered PET preform was biaxially stretch-blow-formed into a single-layered PET bottle by the method described above.
The obtained preform and the bottle were measured for their haze in the body portion of the preform, haze in the body portion of the bottle, carbonic acid gas-barrier property of the bottle and bursting strength of the bottle by the methods described above.

(Comparative Example 2)

A preform and a bottle were formed and measured in the same manner as in Example 1 but throwing, into the hopper of the injection-forming machine for forming the intermediate layer, a dry blend of PET1 and PA1 at a weight ratio of 70:30.

Further, a biaxially-stretched sheet was formed and measured in the same manner as in Example 1 but feeding the PET1 to the hopper of the injection-forming machine.

(Comparative Example 3)

A preform and a bottle were formed and measured in the same manner as in Example 3 but throwing, into the hopper of the injection-forming machine for forming the intermediate layer, a dry blend of APET3 and PA1 at a weight ratio of 70:30.

Further, a biaxially-stretched sheet was formed and measured in the same manner as in Example 3 but feeding the APE3 to the hopper of the injection forming machine.

(Comparative Example 4)

A preform and a bottle were formed and measured in the same manner as in Example 1 but throwing, into the hopper of the injection-forming machine for forming the intermediate layer, a dry blend of APET4 and PA1 at a weight ratio of 70:30.

Further, a biaxially-stretched sheet was formed and measured in the same manner as in Example 1 but feeding the APE4 to the hopper of the injection forming machine.

(Comparative Example 5)

A preform, a bottle and a biaxially-stretched sheet were formed and measured in the same manner as in Example 3 but throwing, into the hopper of the inj ection-forming machine for forming the intermediate layer, a dry blend of APET3, PET1 and PA1 at a weight ratio of 20:20:60. As shown in Table 1, however, the interlayer peeling was confirmed during the interlayer peeling test. Therefore, the bottle was not tested for its bursting strength.

(Comparative Example 6)

A preform, a bottle and a biaxially-stretched sheet were formed and measured in the same manner as in Example 3 but throwing, into the hopper of the injection-forming machine for forming the intermediate layer, a dry blend of APET3, PET1 and PA1 at a weight ratio of 40:40:20.

(Comparative Example 7)

A preform, a bottle and a biaxially-stretched sheet were formed and measured in the same manner as in Example 3 but setting the ratio of the intermediate layer in the bottle to be 10% by weight.

Table 1

| | Layer constitution | Ratio of intermediate layer (wt.%) | Copolymerizable components of low crystalline ethylene terephthalate type polyesters (mol%) | | | Aromatic polyamide type gas-barrier resin |
|---|---|---|---|---|---|---|
| | | | Isophthalic acid | Cyclohexane-dimethanol | Diethylene glycol | Blended ratio in the intermediate layer (wt.%) |
| Ex. 1 | 2-kind-3-layer | 6 | 15.0 | 0 | 3.6 | 30 |
| Ex. 2 | 2-kind-3-layer | 6 | 10.0 | 0 | 3.0 | 30 |
| Ex. 3 | 2-kind-3-layer | 6 | 0.9 | 15.0 | 2.3 | 30 |
| Ex. 4 | 2-kind-3-layer | 6 | 0.9 | 15.0 | 2.3 | 40 |
| Comp. Ex. 1 | single layer | | | | | |
| Comp. Ex. 2 | 2-kind-3-layer | 6 | 1.8 | 0 | 2.3 | 30 |
| Comp. Ex. 3 | 2-kind-3-layer | 6 | 0 | 30 | 2.3 | 30 |
| Comp. Ex. 4 | 2-kind-3-layer | 6 | 20.0 | 0 | 3.3 | 30 |
| Comp. Ex. 5 | 2-kind-3-layer | 6 | 0.9 | 15.0 | 2.3 | 60 |
| Comp. Ex. 6 | 2-kind-3-layer | 6 | 0.9 | 15.0 | 2.3 | 20 |
| Comp. Ex. 7 | 2-kind-3-layer | 10 | 0.9 | 15.0 | 2.3 | 30 |

Table 1 (continued)

| | Haze (%) | | Loss of carbonic acid gas (%) | Interlayer peeling | Bursting strength (MPa) | Refractive index after stretched into 3 x 3 times | | $RI_E$ - $RI_A$ |
|---|---|---|---|---|---|---|---|---|
| | Body portion of preform | Body portion of bottle | | | | $RI_E$ | $RI_A$ | |
| Ex. 1 | 10.8 | 2.6 | -10.78 | no | 1.64 | 1.589 | 1.586 | 0.003 |
| Ex. 2 | 9.5 | 2.6 | -9.85 | no | 1.65 | 1.607 | 1.586 | 0.021 |
| Ex. 3 | 24.0 | 2.6 | -10.80 | no | 1.62 | 1.601 | 1.586 | 0.015 |
| Ex. 4 | 28.9 | 2.3 | -9.44 | no | 1.63 | 1.601 | 1.586 | 0.015 |
| Comp. Ex. 1 | 0.4 | 0.8 | -13.99 | / | 1.72 | / | / | / |
| Comp. Ex. 2 | 15.6 | 5.4 | -10.02 | no | 1.73 | 1.632 | 1.586 | 0.046 |
| Comp. Ex. 3 | 53.6 | 2.1 | -12.23 | no | 1.54 | 1.58 | 1.586 | -0.006 |
| Comp. Ex. 4 | 13.4 | 1.7 | -10.83 | no | 1.59 | 1.584 | 1.586 | -0.002 |
| Comp. Ex. 5 | 29.5 | 2.1 | -8.93 | yes | / | 1.601 | 1.586 | 0.015 |
| Comp. Ex. 6 | 24.8 | 2.5 | -12.46 | no | 1.59 | 1.601 | 1.586 | 0.015 |
| Comp. Ex. 7 | 41.6 | 3.0 | -10.04 | no | 1.58 | 1.601 | 1.586 | 0.015 |

Industrial Applicability:

The biaxially stretch-blow-formed container obtained by biaxially stretch-blow-forming the multilayered preform of the present invention has not only excellent gas-barrier property and transparency but also excellent mechanical strength, and can be favorably used as a pressure-resistant container for which a particularly high degree of gas-barrier property and a mechanical strength against the internal pressure are required.

Description of Reference Numerals:

1 inner layer
2 outer layer
3 intermediate barrier layer
4 intermediate layer

**Claims**

1. A multilayered preform that includes inner and outer layers of an ethylene terephthalate type polyester resin, and at least one intermediate layer of at least a lowly crystalline ethylene terephthalate type polyester resin and a gas-barrier aromatic polyamide resin, wherein:

   said lowly crystalline ethylene terephthalate type polyester resin contains, as a copolymerizable component, a cyclohexanedimethanol in an amount in a range of 15 to 20 mol% or an isophthalic acid in an amount in a range of 7.5 to 15 mol%;
   a weight ratio of said lowly crystalline ethylene terephthalate type polyester resin and said gas-barrier aromatic polyamide resin is in a range of 50:50 to 75:25;
   a weight ratio of said intermediate layer is not less than 1% by weight but is less than 10% by weight per the whole preform; and
   a haze is not less than 5% in a portion where a multilayered structure has been formed.

2. The multilayered preform according to claim 1, wherein said lowly crystalline ethylene terephthalate type polyester resin and said gas-barrier aromatic polyamide resin satisfy the following formula,

$$0 \leqq RI_E - RI_A \leqq 0.03$$

   wherein $RI_E$ and $RI_A$ are refractive indexes of injection-formed plates made, respectively, from said lowly crystalline ethylene terephthalate type polyester resin and said gas-barrier aromatic polyamide resin after they have been biaxially stretched into 3 x 3 times simultaneously.

3. The multilayered preform according to claim 1 or 2, wherein said intermediate layer has not been formed in mouth-neck portion.

4. The multilayered preform according to any one of claims 1 to 3, wherein said intermediate layer contains at least either an oxygen-absorbing component that comprises an oxidizing catalyst and an organic component that can be oxidized or a lamellar silicate.

5. The multilayered preform according to claim 4, wherein said gas-barrier aromatic polyamide resin is a xylylene group-containing polyamide resin having a terminal amino group concentration of not less than 40 eq/$10^6$ g.

6. A multilayered stretch-blow-formed container obtained by biaxially stretch-blow-forming the multilayered preform of any one of claims 1 to 5, a haze being not more than 3% in a portion where a multilayered structure has been formed.

7. The multilayered stretch-blow-formed container according to claim 6, said multilayered stretch-blow-formed container having resistance against the pressure.

Fig. 1

Fig. 2

Fig. 3

## INTERNATIONAL SEARCH REPORT

| International application No. |
| --- |
| PCT/JP2016/070691 |

**A. CLASSIFICATION OF SUBJECT MATTER**
*B29C49/22*(2006.01)i, *B29C45/13*(2006.01)i, *B29C45/16*(2006.01)i, *B29C49/06*(2006.01)i, *B29C49/08*(2006.01)i, *B32B27/34*(2006.01)i, *B32B27/36*(2006.01)i

According to International Patent Classification (IPC) or to both national classification and IPC

**B. FIELDS SEARCHED**

Minimum documentation searched (classification system followed by classification symbols)
B29C49/22, B29C45/13, B29C45/16, B29C49/06, B29C49/08, B32B27/34, B32B27/36

Documentation searched other than minimum documentation to the extent that such documents are included in the fields searched
Jitsuyo Shinan Koho          1922–1996    Jitsuyo Shinan Toroku Koho    1996–2016
Kokai Jitsuyo Shinan Koho    1971–2016    Toroku Jitsuyo Shinan Koho    1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2005/014409 A1 (AMCOR LTD.), 17 February 2005 (17.02.2005), claims; page 5, lines 4 to 22; page 7, line 16 to page 8, line 20; page 9, "Table 1"; page 15, "Table 4"; page 16, lines 15 to 21; page 17, lines 22 to 24; page 18, lines 3 to 27 & EP 1504999 A1 | 1–7 |
| A | JP 2013-028363 A (Yoshino Kogyosho Co., Ltd.), 07 February 2013 (07.02.2013), claims; paragraphs [0011], [0012]; table 2 (Family: none) | 1–7 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 August 2016 (01.08.16) | 09 August 2016 (09.08.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2016/070691 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2008/126745 A1 (Toyo Seikan Kaisha, Ltd.), 23 October 2008 (23.10.2008), claims; paragraphs [0017] to [0020] & US 2010/0206762 A1 & WO 2008/126745 A1 & EP 2130783 A1 & KR 10-2009-0125273 A & CN 101678935 A | 1-7 |
| A | JP 2010-247497 A (Kureha Corp.), 04 November 2010 (04.11.2010), paragraphs [0037], [0038] (Family: none) | 1-7 |
| P,X | WO 2015/111690 A1 (Toyo Seikan Group Holdings, Ltd.), 30 July 2015 (30.07.2015), paragraphs [0017] to [0027]; examples 1 to 3, 5, 6, 10 to 12, 14, 19 & JP 2015-157468 A & JP 2015-157469 A & JP 2015-157470 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004142444 A
- JP 2005059859 A
- WO 2010035654 A
- JP 5296385 B
- JP 2015157468 A